(19) Europäisches Patentamt
European Patent Office
Office européen des brevets

(11) Veröffentlichungsnummer: **0 257 274 B1**

(12) **EUROPÄISCHE PATENTSCHRIFT**

(45) Veröffentlichungstag der Patentschrift: **21.08.91**

(51) Int. Cl.5: **C08J 7/06**, C08J 7/02

(21) Anmeldenummer: **87110141.6**

(22) Anmeldetag: **14.07.87**

# (54) Verfahren zur antistatischen Ausrüstung oder Vorbehandlung von Polyamiden/Polyimiden, die so behandelten Werkstoffe und ihre Verwendung.

(30) Priorität: **25.07.86 DE 3625188**
**28.10.86 DE 3636606**

(43) Veröffentlichungstag der Anmeldung:
**02.03.88 Patentblatt 88/09**

(45) Bekanntmachung des Hinweises auf die Patenterteilung:
**21.08.91 Patentblatt 91/34**

(84) Benannte Vertragsstaaten:
**DE FR GB IT**

(56) Entgegenhaltungen:
**EP-A- 0 035 406**
**US-A- 4 566 991**

**CHEMICAL ABSTRACTS, Band 97, 1982, Seite 46, Nr. 56862c, Columbus, Ohio, US;**

**CHEMICAL ABSTRACTS, MACROMOLECULAR SECTIONS, Band 75, Nr. 16, 18. Oktober 1971, Seite 19, Nr. 99093r, Columbus, Ohio, US;**

(73) Patentinhaber: **BAYER AG**

**W-5090 Leverkusen 1 Bayerwerk(DE)**

(72) Erfinder: **Sirinyan, Kirkor, Dr.**
**Humperdinckstrasse 12**
**W-5060 Bergisch Gladbach 2(DE)**
Erfinder: **Laue, Heinz-Joachim, Dr.**
**Buschstrasse 169**
**W-4150 Krefeld(DE)**
Erfinder: **Merten, Rudolf, Dr.**
**Berta-von-Suttner-Strasse 55**
**W-5090 Leverkusen(DE)**
Erfinder: **Michael, Dietrich, Dr.**
**Deswatinesstrasse 57**
**W-4150 Krefeld(DE)**
Erfinder: **Tima, Milan-Josef, Dr.**
**Gammersbacher Weg 20**
**W-5064 Rösrath 5(DE)**

**EP 0 257 274 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur antistatischen Ausrüstung oder Vorbehandlung zu nachfolgender Lackierung von Werkstoffen aus Basis von Polyamiden, Polyimiden bzw. Polyamidimiden, wo die Werkstoff-Formkörper
mit einer Lösung von Salzgemischen aus

a) Halogeniden von Elementen der 1. und/oder 2. Hauptgruppe des Periodensystems, insbesondere $CaCl_2$, $MgCl_2$, LiCl, NaCl und/oder KCl
und

b)

1) Salzen aus schwachen anorganischen Basen mit starken anorganischen Säuren, insbesondere $AlCl_3$, $FeCl_3$, $TiCl_4$, $SbCl_5$, $CaCl_2$, $FeCl_2$, $CuCl_2$, $ZnCl_2$ und/oder $MoCl_5$

2) und/oder den Chelatkomplexen von b1) mit Schiffschen Basen, Aminen, Carbonsäuren, Diketonen, $\alpha,\beta$-ungesättigten Ketonen und Phosphinen,

c) in einem nichtätzenden, organischen Quell- oder Lösungsmittel für die genannten Werkstoffe, gegebenenfalls unter Wasserzusatz, bevorzugt in einem Alkohol,

bei Temperaturen bis zum Siedepunkt der Lösungsmittel, vorzugsweise bei Temperaturen von -15°C bis +60°C, während 0,5 bis 30 Minuten behandelt und die Formkörper nach Waschen mit Wasser oder Lösungsmitteln getrocknet werden.

Beansprucht werden ferner nach dem Verfahren behandelte antistatische Formkörper, bzw. zur nachfolgenden Lackierung vorbehandelte Formkörper und ihre Verwendung.

Organische, synthetische und natürliche Polymere sind im allgemeinen elektrische Isolatoren. Ihr spezifischer Widerstand liegt zwischen $10^{10}$ und $10^{18}$ Ω.cm.

Werden spezielle Polymere mit polykonjugierter Struktur der Hauptkette mit starker Oxidations- oder Reduktionsmitteln behandelt, so fällt ihr spezifischer Widerstand von ca. $10^9$ auf ca. 10 Ω.cm. (s. beispielsweise "Organic Semiconductors, F. Gutmann and L.E. Lyons, John Wiley and Sons, Inc., New York (1967)). Solche konjugierten Polymerisate sind jedoch nicht nach in der Kunststofftechnik üblichen Methoden wie Spritzgießen, Extrudieren, Kalandrieren verarbeitbar und nicht in gängigen organischen und anorganischen Lösemitteln löslich.

Eine andere Möglichkeit zur antistatischen Ausrüstung in Polymeren ist der Zusatz von Charge-Transfer-Komplexen, beispielsweise auf der Basis von Tetrathiofulvalen oder Tetracyanchinodimethan (vgl. beispielsweise DE-B 3 131 251), die Einarbeitung dieser Komplexe in Polymermatrices ist sehr aufwendig und daher für die kunststoffverarbeitende Industrie - außer in ganz speziellen Fällen - nicht interessant.

Ferner ist es möglich, Antistatika auf die Oberfläche eines fertigen Kunststoffteiles aufzubringen oder während der Herstellung direkt in die Polymermatrices einzuarbeiten, z. B. ethoxylierte Fettamine, langkettige Phosphorsäureester- und langkettige Paraffinsalze. Im ersten Fall wird durch die geringe Haftung der Antistatika eine zeitlich begrenzte antistatische Wirkung erzielt, in zweiten Fall beeinträchtigt ihre Einarbeitung in vielen Fällen die ursprünglichen physikalischen und chemischen Eigenschaften des Polymermaterials. In diesem Zusammenhang sei erwähnt, daß die besagten Antistatika unter ganz bestimmten Bedigungen wie etwa bei genügend großer Luftfeuchtigkeit eine antistatische Wirkung auf weisen.

In der DE-A-3435841 wird beschrieben, daß Salze von Sulfonsäuren, wie sie bei der Sulfonierung von Alkenylalkylpolyglykolethern die Formel

$R_1$,-O $(C_nH_{2n}O)$ $R_2$

mit Schwefeltrioxid und nachfolgender Hydrolyse entstehen, sich aus Antistatika von Polyamiden (PA) eignen. Die o.a., durch eine $SO_3$-Nachbehandlung modifizierten Antistatika weisen auf PA eine brauchbare Wirkung auf, die jedoch durch äußere Einflüße wie geringe Luftfeuchtigkeit oder durch leichte mechanische bzw. chemische Beanspruchung von einigen Wochen nachläßt.

Ferner kann der Literatur z. B. DE-A 3 409 462 entnommen werden, daß thermoplastische Mischungen auf der Basis von polymeren Verbindungen und Pyrrol-Polymerisaten, die mit sauerstoffhaltigen Oxidationsmitteln polymerisiert sind, sich durch ihre gute elektrische Leitfähigkeit auszeichnen.

Auch in diesem Fall werden die physikalischen Eigenschaften des Matrix-Polymeren wie Schlag- und Kerbschlagzähigkeit, Zug-, Dehnungs- bzw. Elastizitätsverhalten durch das Polypyrrol beeinträchtigt.

Im weiteren sei erwähnt, daß Filme, die eine Pyrrol-Permeation bzw. -Diffusion ermöglichen, auf einer Seite mit Pyrrol vorbehandelt und dann auf der anderen Seite das aufgenommene Pyrrol mit Hilfe von wässrigen $FeCl_3$-Lösung zum dotierten Polypyrrol polymerisiert werden.

Dieses technisch sehr aufwendige Verfahren ist auf einige gegenüber Pyrrol große Durchlässigkeit aufweisende Werkstoffe, wie Polypropylenvliese usw. eingeschränkt und führt zu Produkten mit sehr hohen Leitfähigkeitswerten von ca. 10 - 30 $\Omega^{-1}.cm^{-1}$ (s. beispielsweise V. Bocchi and G. P. Gardini, J. Chem. Soc., Chem. Communications, S. 148 (1986)). Bekannterweise sind jedoch solche elektrisch gut leitende Materialien im Antistatikbereich einsetzbar.

Weiterhin kann der Literatur entnommen werden, daß Polymerfilme, die mit Pyrrol beschichtet und dann in einem wässrigen $FeCl_3$-Bad nachbehandelt werden, Oberflächenleitfähigkeit im Bereich von $10^{-1}$ - $10^{-9}$ $\Omega^{-1}.cm^{-1}$ aufweisen. Hierbei wird die Beschichtung von Polypyrrol entweder durch Aufdampfen oder durch Tauchen in ein Gemisch bestehend aus einem Lösemittel und dem Pyrrol erzielt. Die hierzu eingesetzten Lösemittel führen weder zu einer Quellung noch zu einer partiellen Aufrauhung der Substratoberfläche.

Leider sind die so aufgebrachten Auflagen nicht abrieb-bzw. haftfest. Auch ihre antistatische Wirkung läßt durch äußere Einflüsse, wie leichte mechanische oder chemische Beanspruchung sehr schnell nach.

Eine Aufgabe der Erfindung ist, herkömmliche polymere Werkstoffe wie Folien, Vliese, Gewebe, Fasern und Spritzgußteile etc. auf Basis von herkömmlichen Polyamiden/Polyimiden durch eine nachträgliche Behandlung mit einem permanent antistatischen, abriebfesten bzw. guthaftendem Medium auszurüsten, ohne die mechanischen und chemischen Eigenschaften des polymeren Basismaterials negativ zu beeinflussen.

Eine weitere Aufgabe Erfindung ist ein relativ schonendes Verfahren zur Vorbehandlung von Substratoberflächen von Formteilen aus synthetischem Polyamid/Polyimid und/oder Polyamidimid für das anschließende Aufbringen haftfester Lackauflagen.

Es ist allgemein bekannt, daß handelsübliche Kunststoffe durch Waschen, Entfetten, Sandstrahlen, Schleifen, Abbürsten, Phosphatieren, Passivieren, Fluatieren, Flammen, Beizen und Ätzen vorbehandelt werden müssen, damit die im nächsten Schritt aufgebrachte Lackauflage auf der Substratoberfläche eine gute Haftung aufweist.

Es ist ferner bekannt, daß die für zahlreiche Kunststoffgegenstände üblichen o.a. Vorbehandlungen für Polyamidsubstrate ungeeignet sind.

Das direkte, haftvermittlerfreie Aufbringen von technisch interessanten Deck- und Klarlackauflagen auf Polyamidsubstrate ist immer noch ein unbefriedigend gelöstes Problem.

Nur bestimmte Lacke auf Basis von beispielsweise Vinylchlorid-Mischpolymerisaten, namentlich von Vinylchlorid-Vinylisobutylether oder Lacksysteme auf Basis von löslicher Mischpolyamiden wie N-Methoxymethyl-6,6-Polyamid zeichnen sich durch ihre gute Haftung auf Polyamiden aus. Diese Lackfilme sind jedoch weicher bzw. weniger lösemittelbeständig und kratzfest als die herkömmlichen Überzüge auf Desmodur®/Desmophen®-(Polyisocyanat)-Basis oder auf Acrylat-, Polyester-, Nitrocellulose-, Acetobutyrat- und Epoxidharz-Grundlage.

Es ist deshalb bereits vorgeschlagen worden (vgl. Prospekt über "Desmodur/Desmophen Bayer-Lackstoffe, Bestell.-Nr. LS 44427 vom 5.86, Bayer AG, D-5090 Leverkusen), Polyamid-Kunststoffteile in einer sogenannten "Power-Waschanlage" mittels wäßriger Reinigungsmittel zu reinigen, zu spülen, zu trocknen und mit ionisierender Luft abzublasen. Durch den letzten Schritt wird eine elektrostatische Aufladung der Kunststoffoberfläche vermieden und eine damit verbundene Staubanfälligkeit weitgehend verhindert.

Um eine genügende Haftung der Deck- bzw. Klarlackauflage zu erzielen, werden technische Polyamid-Kunststoffteile wie Radzierblenden, Türgriffe, Radnaben, Zierleisten oder Stoßstangen mit einer Haftvermittlerauflauge grundiert. Als brauchbare Grundierungen seien beispielsweise auf mittelelastische 2-Komponenten(2 K-)Polyurethan-Grundierung vom Typ RR 2525/2B oder hochelastische und leitfähige 2K-Grundierung vom Type RR 2526 der Fa. Bayer AG, D-5090 Leverkusen und auf die vom Typ R 2001 der Fa. Dr. Renger und Co. KG, D-8602 Strullendorf, hingewiesen.

Diese an sich brauchbaren Methoden haben allerdings den Nachteil, daß sie relativ viele Verfahrensschritte bzw. den Einsatz von zusätzlichen Chemikalien anfordern und darüber hinaus in vielen Fällen die guten optischen Eigenschaften wie Brillanz und Klarheit und Glanz des Decklackes negativ beeinflußen. Ferner geht aus den bisherigen Untersuchungen hervor, daß die so angebrachten Lackauflagen in vielen Fällen den hohen Anforderungen der Temperaturwechselprüfung gemäß DIN 53 496 nicht genügen.

Diese Aufgaben werden überraschenderweise im erfindungsgemäßen Verfahren dadurch gelöst, daß man polymere Werkstoffe auf Basis von herkömmlichen Polyamiden, Polyimiden oder Polyamidimiden

mit der Lösung einer Mischung von

a) Halogeniden von Elementen der 1. und 2. Hauptgruppe des Periodensystems, insbesondere Chloriden, besonders $CaCl_2$ und/oder $MgCl_2$ und/oder KCl und/oder LiCl und/oder NaCl

mit

b)

1) Salzen aus schwachen anorganischen Basen und starken anorganischen Säuren, insbesondere $FeCl_3$ und/oder $AlCl_3$ und/oder $TiCl_4$ und/oder $TiCl_3$ und/oder $BCl_3$ und/oder $SnCl_2$ und/oder $ZnCl_2$ und/oder $CuCl_2$ und/oder $MoCl_5$

2) und/oder deren Chelatkomplexen von b1) mit Schiffschen Basen, komplexbildenden Aminen, Carbonsäuren, Diketonen, $\alpha,\beta$-ungesättigten Ketonen und Phosphinen,

c) in einem nichtätzenden, organischen Quell- oder Lösungsmittel für die genannten Werkstoffe, gegebenenfalls unter Wasserzusatz; vorzugsweise in einem technischen Alkohol,

bei Temperaturen bis zum Siedepunkt der Lösungsmittel c), vorzugsweise bei Temperaturen von -15° C bis +60° C, insbesondere +15° C bis +40° C, während 0,5 bis 30 Minuten behandelt und die Formkörper nach Waschen mit Wasser oder Lösungsmittel trocknet.

Geeignete Halogenide a) (Fluoride, Chloride, Bromide, Jodide) von Elementen der 1. und 2. Hauptgruppe sind insbesondere die Chloride, wie NaCl, KCl, $BaCl_2$; bevorzugt sind LiCl, $MgCl_2$ und $CaCl_2$.

Geeignete Salze schwacher Basen und starker Säuren 1b) sind beispielsweise Sulfate, Nitrate und vor allem Chloride von Metallen der 3. und 4. Haupt- und Nebengruppe und von Nichtedelmetallen der 6.-8. Nebengruppe sowie von Zink oder Kupfer. Bevorzugt sind $SnCl_2$, $AlCl_3$, $TiCl_3$, $TiCl_4$, $BCl_3$ und insbesondere $FeCl_3$.

Diese Salze b1) (im wesentlichen deren Metallionen von b1)) können auch in Form von Chelatkomplexen b2) angewendet werden. Besonders bevorzugt werden Gemische von LiCl, $MgCl_2$, $CaCl_2$ oder $BaCl_2$ mit $FeCl_2$, $FeCl_3$, $TiCl_3$, $TiCl_4$, $BCl_3$, $AlCl_3$ oder $SnCl_2$, eingesetzt, ganz besonders geeignet sind hierbei Gemische von $CaCl_2$ und $FeCl_3$.

Geeignete Quell- und Lösungsmittel sind solche wie sie in üblichen Handbüchern über Polyamide beschrieben sind (vgl. z.B. "Die Polyamide" von Hopff, Müller, Wegner, Springer-Verlag (1954), sowie "Polymer Handbook" von Brandrup et al, New York, Band IV (1975)). Geeignete Lösungsmittel sind beispielsweise primäre, sekundäre oder tertiäre Alkohole mit 1 bis 8 C-Atomen, bevorzugt sind primäre und/oder sekundäre Alkohole mit 1 bis 4 C-Atomen. Beispielsweise seien genannt die bevorzugten, niedrigen aliphatischen und araliphatischen (technischen) Alkohole, wie z.B. Methanol, Ethanol, Isopropanol, n-Propanol, n-Butanol, Isobutanol, tert.-Butanol, Benzylalkohol und Phenylethylalkohol. Besonders bevorzugt sind Methanol und Ethanol. Auch Glykole wie Ethylenglykol und/oder Ester niedriger Carbonsäuren wie Butylacetat oder auch Dimethylsulfoxid und amidgruppenhaltige Lösungsmittel, wie Formamid und Dimethylformamid oder Dimethylacetamid, kommen in Betracht. Selbstverständlich sind auch Mischungen dieser Lösungsmittel einsetzbar. Den Lösungsmitteln c) kann auch Wasser (in Mengen von bevorzugt 0 bis 40 Gew.-% der Lösungsmittel/Wasser-Mischung) zugesetzt werden.

Gewünschtenfalls können auch übliche Polyamidweichmacher (0,2 - 10 Gew.-%, vorzugsweise 0,5 - 5 Gew.-%, bezogen auf die gesamte Flüssigkeitsmenge) zugesetzt werden. Beispielhaft seien Benzolsulfonsäuremonoethylamide, p-Toluolsulfonsäureamid, Dioxidiphenylsulfon und Dibenzylphenol, Lactame wie $\gamma$-Butyrolactam, $\alpha$-Pyrrolidon, Lactone and Tetrahydrofurfurylalkohol-Carbonsäureester genannt (vgl. beispielsweise R. Vieweg, Kunststoff-Handbuch, Band VI, Carl Hanser Verlag, München (1966)).

Um die Quellwirkung der erfindungsgemäßen Lösungen zu reduzieren, können diese gegebenenfalls mit inerten Lösemitteln wie Wasser, Glykolen wie Ethylenglykol und/oder Estern niedriger Carbonsäuren, wie z.B. Butylacetat, in Mengen von 0,1 bis 40 Gew.-%, bevorzugt in Mengen bis 30 Gew.-%, versetzt werden.

Die Gesamtmenge der erfindungsgemäßen zu verwendenden Salzgemische (a+b) beträgt vorzugsweise 2,5 - 25 Gew.-% (besonders bevorzugt 5 - 15 Gew.-%), bezogen auf die Lösungsmenge. Der Anteil der Salze schwacher Basen b1) sollte 30 Gew.-% (bezogen auf die Gesamtsalzmenge (a+b), die bis zur jeweiligen Löslichkeitsgrenze ansteigen kann) nicht übersteigen.

Wie bereits erwähnt, können auch die Metall-Komplexverbindungen (Metallchelate b2)), insbesondere der Elemente Al, Fe, Ti, Sb, Mo und Cu zur Durchführung des Verfahrens eingesetzt werden. Nach unseren Beobachtungen sind solche Komplexverbindungen b2) der oben angeführten Elemente auf Basis von Diketonen wie Pentandion-2,4, ungesättigten Ketonen wie Mesityloxid, aromatischen und/oder aliphatischen Schiffschen Basen, aliphatischen und aromatischen Aminen oder Carbonsäuren wie Ascorbinsäure geeignet. Als weitere, zur Durchführung des Verfahrens geeignete Komplexliganden seien aromatische bzw. (cyclo)-aliphatische Phosphine wie Triphenylphosphin oder Tributylphosphin erwähnt.

Die Behandlung der Werkstoffe/Formkörper erfolgt im allgemeinen bei -15° C bis zum Siedepunkt der verwendeten Lösungsmittel, vorzugsweise bei 15° C bis 40° C, bevorzugt bei Raumtemperatur, d.h. 17° C bis 25° C. Die Behandlungszeit liegt im allgemeinen zwischen 0,5 bis 30 Minuten, vorzugsweise 1 bis 15 Minuten, besonders bevorzugt 3 bis 7,5 Minuten. Eine Behandlung kann auch vorzugsweise unter der Einwirkung von Ultraschall erfolgen.

Eine weitere Verfahrensvariante besteht darin, daß man die Werkstoffe zur antistatischen Ausrüstung mit einem Gemisch bestehend aus einem (zusätzlichen) handelsüblichen Antistatikum und dem erfindungsgemäßen, halogensalzhaltigen, vorzugsweise alkoholischen Lösungsmittelsystem behandelt.

Als Antistatika kommen langkettigen $C_8$-$C_{35}$ Paraffinsulfonsalze, quarteräre Ammoniumsalze wie Tetrabutylammoniumchlorid, Tetramethylammoniumbromid, Diethyldibutylammoniumsulfat, Tricapryl-methylammoniumchlorid, Tetracaprylmethylammoniumbromid, wasserlösliche Salze der Sulfonsäuren $RSO_3Na$, wobei R einen geradkettigen Alkylrest mit 8 -30 C-Atomen, vorzugsweise

mit $C_8$-$C_{12}$-Atomen, darstellt, ferner Alkenylalkylpolyglykolether in Frage. Bei Alkylglykolpolyglykolethern der Formel

$$R_1\text{-O-}(C_nH_{2n}\text{-O})_x\text{-}R_2$$

bedeutet,

- $R_1$ H oder einen geradkettigen Alkenylrest mit 8 bis 35 C-Atomen,
- $R_2$ H oder einen Alkylrest mit 1 bis 12 C-Atomen und
- n eine ganze Zahl von 2 bis 4, während
- x Werte von 0 bis 35 annehmen kann.

Bevorzugt sind Polyether mit n = 2 und/oder 3 und Molekulargewichten von 150 bis 5000.

Ferner sind Salze solcher Sulfonsäuren, in deren Ausgangsmaterial R einen ungesättigten Fettalkylrest und als Kation Alkali, Erdalkali, Ethanolammonium, Diethanolammonium und Triethanolammonium-Ionen aufweisen, zur Durchführung des Verfahrens geeignet. Ferner können zur Durchführung des Verfahrens Phosphinoxide der allgemeinen Formel

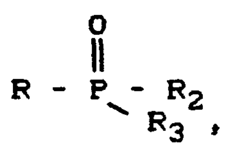

wie beispielsweise in der US-A-3,709,852 beschrieben, bevorzugt Decyl-/Hexyl-/Octyl-Phosphinoxide (wie beispielsweise in der EP-A 0 134 482 beschrieben) eingesetzt werden.

Die Gesamtmenge der Antistatika beträgt vorzugsweise 0,2 bis 10 Gew.-%, besonders bevorzugt 0,5 bis 5 Gew.-%, ganz besonders bevorzugt 1,0 bis 2,5 Gew.-% im erfindungsgemäßen Gemisch (bezogen auf Feststoffe). Diese Mitverwendung der Antistatika erfolgt vorzugsweise bei der erfindungsgemäßen Behandlung der Werkstoffe zur Antistatik-Ausrüstung; bei der erfindungsgemäßen Vorbehandlung für haftfeste Lackierung verzichtet man im allgemeinen auf den Zusatz dieser (üblichen) Antistatik-Mittel.

Die Auswahl der Lösungsmittel in den erfindungsgemäßen Behandlungsbädern muß natürlich so erfolgen, daß sie nicht auflösend (z.B. bei gewissen Polyamiden) wirken oder die mechanischen Eigenschaften der Formkörper (z.B. Schlag- und Kerbschlagfestigkeit) reduzieren. Der Durchschnittsfachmann auf diesem Gebiet kann ohne Schwierigkeiten geeignete Lösungsmittel für das jeweilige Polyamid/-imid auswählen.

Bei der praktischen Durchführung des Verfahrens geht man zweckmäßigerweise so vor, daß man den Polyamidformkörper in das erfindungsgemäße Ausrüstungssystem eintaucht, nach 0,5 bis 30 Minuten aus dem Bad entfernt und von anhaftendem Lösungsmittel befreit.

Die Entfernung des Lösungsmittel erfolgt im allgemeinen durch Verdampfen, gegebenenfalls unter reduziertem Druck. Höher siedende Lösungsmittel werden zweckmäßigerweise durch Extraktion oder Spülen mit niedrigsiedenden Lösemitteln entfernt.

Das erfindungsgemäße Verfahren ist auf sämtliche (insbesondere handelsüblichen) aromatischen und/oder aliphatischen Polyamidtypen, insbesondere semikristalline Typen wie Polyamid-6, Polyamid-6,6 Polyamid-10, -11 und -12 sowie Copolyamide anwendbar.

Das Verfahren ist auf aromatische und (cyclo)-aliphatische Polyamide oder Copolyamide bzw. Polyamid-Imide wie Kevlar®- und Kapton®-Typen anwendbar. Es können sowohl füllstoffhaltige als auch ungefüllte Polyamide, Polyimide und Polyamid-Imide mit gleichem Erfolg behandelt werden.

Ohne den Umfang des erfindungsgemäßen Verfahrens einzuschränken, sei erwähnt, daß Polyamide, die als Füllstoffe Mineralien wie Talkum, Kreide, Wollastonit, $CaF_2$, Kaolin; Ruße und übliche Farbpigmente bzw. Oxide wie Titandioxid und Aluminiumoxid bzw. Verstärkungsmaterialien wie Glas-, Kohle- und Aramidfasern bzw. -matten, sowie deren Mischungen untereinander enthalten, gut geeignet sind.

Füllstoffbeimischungen verkürzen je nach Anteil die erforderliche Behandlungszeit des ungefüllten Materials.

Darüber hinaus sind schlagfest-modifizierte Polyamidtypen, welche die im Stand der Technik bekannten Modifikatoren und Hilfsmittel (wie z.B. Naturkautschuk-, synthetisches Polyisopren, Polybutadien, Polyisobutylen, Polyacrylatkautschuktypen, Polystyrol-Polybutadien-Copolymerisate, EPDM-Elastomertypen, Ethylen-Vinylacetat-Copolymere oder ihre Mischungen oder gepfropfte Poly- oder Copolymerisate enthalten, zur Durchführung des Verfahrens gut geeignet.

Ferner sind Misch- und Cokondensate der besagten Polyamide mit weiteren Polymeren (wie z.B. 2,6-Dimethylpolyphenylenoxiden, Polyphenylensulfiden, Polyestern wie Polybutylenterephthalat, halogenierten bzw. halogenfreien Polycarbonaten, Polystyrol, aromatischen Imiden, aliphatischen und/oder aromatischen Amidimiden sowie deren Mischungen untereinander) zur Durchführung des Verfahrens geeignet.

Bei der Anwendung des Verfahrens zur Vorbehandlung der Werkstoff-Oberflächen zur Erzeugung guthaftender Lackierungen können alle herkömmlichen, handelsüblichen, sowohl physikalisch- als

auch chemisch-trocknenden, sowie elektronen- oder lichtstrahlhärtenden bzw. wärmehärtenden Ein- und Mehrkomponentenlacksysteme, sowohl Deck-als auch Klarlacksysteme, eingesetzt werden. Ohne den Umfang der Erfindung einzuschränken, sei auf herkömmliche DD-Lacke, Alkyl-, Melaminharz-Lacke, gesättigte Polyesterharze, härtende, nichthärtende und vinylmodifizierte Alkydharze, Harnstoffharze, Melaminharze, Phenolharze, nichthärtende Phenolharze (Novolacke), TSA (thermosetting Acrylate)-Lacke, CAB (Cellulose-Acetobutyrat)-Lacke, NC-(Nitrocellulose)-Lacke, Kautschuk-, Silikon-, Polyol-, Amin- und Polyamidhaltige Lacksysteme bzw. deren Mischungen und Cokondensate untereinander hingewiesen (s. beispielsweise H. Kittel, Lehrbuch der Lacke und Beschichtungen, Band IV, S. 76-306, Verlag W.A. Columb (1976)). Selbstverständlich können die o.a.

Lacke in Form von echten Lösungen, Dispersionen, Suspensionen oder kolloidalen Systemen zur Durchführung des erfindungsgemäßen Verfahrens eingesetzt werden. Als Lösemittel kommen sowohl polare (wie Alkohole, Wasser und Ketone) als auch nicht polare Lösungsmittel (wie 1,1,1-Trichlorethan, Perchlorethylen, Ligroin und Waschbenzin) in Frage.

Lösungsmittelarme oder lösungsmittelfreie Zweikomponenten-Beschichtungssyteme wie EP-(Epoxidharz)-Lacke, ungesättigte UP-(Polyester)-Lacke, Polyurethan-(PU)-Lacke, Polyacrylat- und Polymethacrylat-Systeme (vgl. beispielsweise H. Kittel, Lehrbuch der Lacke und Beschichtungen, Band IV, S. 328-358, Verlag W.A. Colomb (1976)) bzw. deren Mischungen untereinander werden zur Durchführung des Verfahrens vorzugsweise eingesetzt.

Selbstverständlich können zur Durchführung des Verfahrens zur Erzeugung haftfester Lacke auf den erfindungsgemäß vorbehandelten Werkstoffen Lacksysteme, die zusätzliche Stoffe, wie Pigmente, Bindemittel, Tenside, Oxide, Mineralien und Verstärkungsmaterialien bzw. Weichmacher und sonstige Hilfsstoffe wie Antioxidantien, Fungizide und UV-Absorber enthalten, eingesetzt werden (vgl. H. Kittel, Lehrbuch der Lacke und Beschichtungen, Band VIII, Teil 2 S. 440-531, Verlag W.A. Colomb (1980)). Besonders gut geeignet sind übliche Lacksysteme, die metallische Pigmente auf der Basis von Aluminiumbronze, Chrom-, Eisen-, Nickel-, Kobalt-, Zink- und Manganbasis enthalten.

Zum Aufbringen von Lackauflagen auf den erfindungsgemäß vorbehandelten Polyamid-Werkstoffen kann nach den üblichen Methoden wie nach Streich-, Walzen-, Tauch-, Flut-, Gieß-, Spritz-, Airless-Spritz-, Siebdruck-, elektrostatischem bzw. thermischem Spritzverfahren oder nach den Elektroosmose- oder Elektrolyseverfahren vorgegangen werden.

Die Schichtdicken von Lackauflagen können von 0,01 bis mehrere hundert µm variiert werden.

Die Lacke, die auf nach dem neuen Verfahren vorbehandelten Polyamidoberflächen aufgebracht werden, zeichnen sich durch ihre hervorragende Abzugsfestigkeit aus und bestehen die Temperaturwechselprüfung nach DIN 53 496 und Kondenswasser-Klimatest nach DIN 50 017 sehr gut. Die Abzugsfestigkeitswerte der Lackauflagen gemessen nach DIN 53 151 liegen im Bereich GtO (sehr gut).

Gegenstand der Erfindung sind somit auch haftfest lackierte Polyamidformkörper ohne Haftgrundierung (Primer), vorbehandelt nach dem erfindungsgemäßen Verfahren des Anspruchs 1, die pigmentfreie oder pigmentierte Basis- und/oder Decklacke aufweisen.

Die verfahrensgemäß vorbehandelten Formkörper weisen im allgemeinen - neben veränderter Oberflächenstruktur - Kationen der genannten Elemente, vorzugsweise Al, Ca, Ti, Sb, Sn, Zn, Fe und/oder Cu auf und gegebenenfalls Halogenidanionen oder Komplexliganden.

Die Verwendung der erfindungsgemäß behandelten/aufgebauten Polyamidformkörper liegt beispielsweise im Haushalt-, Elektro-, Elektronik-, Büro-, Automobil-, Flugzeug-, Bergbau und Anlagenbereich, sowohl aus antistatische Formkörper als auch als lackierte Formkörper.

Beispiel 1

Eine 90 x 100 x 3 (mm) starke glasfaserverstärkte (30 Gew.-%) Kunststoffplatte aus Polyamid-6 wird in einem Antistatikbad, welches
125,0 g $CaCl_2$ (Komponente a)
15,0 g $FeCl_3$ (Komponente b)
1400 ml Methanol (Komponente c)
400 ml $H_2O_{dest}$
2,0 g Benzyldodecyldimethylammoniumchlorid (übliches Antistatikmittel)
enthält, 5 Minuten bei Raumtemperatur (RT) behandelt, anschließend mit destilliertem Wasser gewaschen und 120 Minuten bei 80 °C getrocknet.

Man bekommt eine permanent antistatisch ausgerüstete Polymerplatte mit einem Oberflächenwiderstand von 3 • $10^8$ Ω cm und einer Halbwertzeit von 2 Sekunden.

Der Oberflächenwiderstand $R_{OA}$ wurde nach DIN 53 482 bzw. die Halbwertzeit nach DIN 53 486 ermittelt. Aus den Schlagzähigkeitsuntersuchungen nach DIN 53 453/ISO R 173 geht hervor, daß ihre Schlagzähigkeit von dem Antistatikbehandlungsvorgang nicht beeinflußt wird.

Beispiel 2

Ein Spritzgutformteil aus kautschukmodifiziertem Polyamid-6 wird in einer Lösung aus
1500 ml Methanol
125,0 g $CaCl_2$
4,0 g $TiCl_4$
10 Minuten bei RT behandelt und dann mit $H_2O_{dest}$ gewaschen, bei 110°C 3 h getrocknet.

Man bekommt eine permanent antistatische ausgerüstete Polymerplatte mit einem Oberflächenwiderstand von $10^8$ Ω.cm, bestimmt nach DIN 53 482 und einer Halbwertzeit von 1,5 Sekunden, bestimmt nach DIN 53486. Die Schlag-bzw. Kerbschlagfestigkeit des Materials wird von dem Behandlungsvorgang nicht beeinflußt.

Beispiel 3

Eine 90 x 150 x 3 (mm) starke Spritzguß-Kunststoffplatte aus einem handelsüblichen Polyamid-6,6 wird in einer Lösung aus
1500 ml Ethanol
110,0 g $CaCl_2$
19,0 g $FeCl_3$
bei RT während 3 Minuten behandelt, 1 Minute mit destilliertem Wasser gewaschen und anschließend 30 Minuten bei 110°C getrocknet. Man bekommt eine permanent antistatische Platte. Der so antistatisch ausgerüstete Formkörper wurde einer modifizierten Temperatur-Wechselprüfung nach DIN 53 496 ausgesetzt, wobei die Wärmelagerung bei +110°C und die Kältelagerung bei -40°C erfolgte. Die "Antistatikauflage" haftet auf der Formkörperfläche bzw. an der Formkörpermatrix so fest, daß sie keine Veränderung zeigt. Die Schlag- bzw. Kerbschlagzähigkeit wird von der Antistatik-Behandlung nicht beeinflußt.

Beispiel 4

Ein Formteil aus einem mit 40 Gew.-% mineralfaserverstärktem Polyamid-6 wird in einer Lösung aus
100,0 g LiCl
19,0 $FeCl_3$
1000 ml n-Butanol
5,0 g Benzyltriethylammoniumchlorid
bei 30°C 8 Minuten behandelt, gemäß Beispiel 1 gespült und anschließend getrocknet.

Man bekommt einen permanent antistatisch ausgerüsteten Formkörper, dessen Oberflächenwiderstand $R_{OA}$ nach DIN 53482 $7 \cdot 10^7$ Ω.cm bzw. Halbwertzeit nach DIN 53486 0,9 Sekunden beträgt.

Beispiel 5

Eine 90 x 150 x 3 mm starke Kunststoffplatte aus mit 30 % kautschukversetzten Polyamid-6 wird in einem Antistatikbad, welches
100,0 g $CaCl_2$
17,5 g $FeCl_3$
1000 ml Isopropanol
200,0 ml $H_2O_{dest}$
8,0 g Tetraethylenglykoldimethylether
enthält, 12,5 Minuten bei RT behandelt, anschließend im destillierten Wasser gespült und über Nacht bei 50°C getrocknet.

Man bekommt eine permanent antistatisch ausgerüstete Polymerplatte mit einem Oberflächenwiderstand von $10^7$ Ω.cm bzw. einer Halbwertzeit von ~ 1,5 Sekunden.

Beispiel 6

Eine 90 x 150 x 3 (mm) starke glasfaserverstärkte (30 Gew.-%) Kunststoffplatte auf Polyamid-6 wird in einem Antistatikbad, welches
125,0 g $CaCl_2$
17,0 g $SnCl_2$
1500 ml Methanol
400 ml $H_2O_{dest}$
8,0 g Octadecylamin
enthält, 8 Minuten bei 35°C behandelt, mit destilliertem Wasser gewaschen und anschließend bei 80°C über Nacht getrocknet.

Man bekommt einen permanent antistatischen und abriebfesten Werkstoff. Dieser Werkstoff wurde einer modifizierten Temperatur-Wechselprüfung nach Beispiel 3 ausgesetzt. Die "Antistatikauflage" haftet an bzw. auf der Formkörperoberfläche so fest, daß sie keine Veränderung zeigt.

Beispiel 7

Ein 100 x 100 x 0,5 (mm) starke durchsichtige Kunststoffplatte aus Polyamid-6 und Polyamid-11 wird in einem Bad bestehend aus
80,0 g $CaCl_2$
25,0 g $AlCl_3$
1000 ml n-Butanol
14,0 g Octadecylsulfonsäure-Na-Salz
19 Minuten bei RT behandelt und anschließend nach Beispiel 1 getrocknet.

Man bekommt eine durchsichtige, permanent antistatisch ausgerüstete Polymerfolie mit einem Oberflächenwiderstand von $10^6$ Ω.cm bestimmt nach DIN 53482 bzw. einer Halbwertzeit von ~ 1,3 Sekunden bestimmt nach DIN 53486.

Beispiel 8

Eine 100 x 100 x 0,8 mm starke, glasmattenverstärkte, coextrudierte Kunststoffplatte aus Polyamid-6 und Polyamid-11 wird in einem Bad, bestehend aus
140,0 g $CaCl_2$
25,0 g $FeCl_3$

150 ml $H_2O$
1500 ml Methanol
9 Minuten lang bei 30 °C behandelt, gewaschen und anschließend nach Beispiel 1 getrocknet.

Man bekommt eine permanent antistatisch ausgerüstete Kunststoffplatte mit einem Oberflächenwiderstand von $10^8$ Ω.cm und einer Halbwertzeit von 2 Sekunden. Die "Antistatikausrüstung" haftet auf der Formkörperoberfläche bzw. an der Formkörpermatrix so fest, daß sie trotz mehrtägiger Lagerung in destilliertem Wasser bei RT keine Veränderung zeigt. Aus weiteren Untersuchungen geht hervor, daß die physikalischen Eigenschaften wie Zug-Dehnung oder E-Modul des Polymermaterials durch die Antistatik-Behandlung nicht beeinflußt werden.

Beispiel 9

Eine 100 x 100 x 0,9 mm starke, Wollastonit-verstärkte Polymid-6 Platte wird in einem Bad, bestehend aus
150,0 g $CaCl_2$
29,0 g $Fe^{III}$-Acetylacetonat
3,0 g Tetraethylenglykoldimethylether
150 ml Ethylenglykol
100 ml $H_2O$
10 Minuten lang bei 65 °C behandelt, mit $H_2O$ dest. gewaschen und anschließend nach Beispiel 1 getrocknet.

Man bekommt eine permanent antistatisch ausgerüstete Kunststoffplatte mit einem Oberflächenwiderstand von $10^8$ Ω•cm und einer Halbwertzeit von 1,5 Sekunden. Die "Antistatikausrüstung" haftet auf der Formkörperoberfläche so fest, daß sie den Hafttest nach DIN 53 151 mit Gt•O besteht.

Beispiel 10

Eine 100 x 100 x 0,8 mm starke Polyamidplatte nach Beispiel 9 wird in einem Bad, bestehend aus
125,0 g $CaCl_2$
38,0 g FeIII-Komplex der Schiffschen Base auf Basis von Benzaldehyd und Anilin (s. Herstellung beispielsweise P.S. Zacharias et al., Indian J. Chemistry, 24A, 936 (1985))
1000 ml Methanol/100,0 ml $H_2O$
werden 12 Minuten lang bei RT behandelt, gewaschen und anschließend nach Beispiel 1 getrocknet.

Man bekommt eine permanent antistatisch ausgerüstete Kunststoffplatte mit einem Oberflächenwiderstand von $10^8$ Ω•cm und einer Halbwertzeit von 2 Sekunden.

Beispiel 11

Eine Polyamidplatte nach Beispiel 1 wird in einem Antistatikmedium, welches
1000 ml Ethanol
100,0 g KCl
20,0 g Fe III-Komplex der Schiffschen Base auf Basis von Anilin und Salicylaldehyd (s. Herstellung beispielsweise P.S. Zacharias et al, Indian J. Chemistry, 24A, 936 (1985))
enthält, 12,5 Minuten lang bei RT behandelt, gewaschen und anschließend nach Beispiel 1 getrocknet.

Man bekommt eine permanent antistatisch ausgerüstete Kunststoffplatte mit einem Oberflächenwiderstand von $10^7$ Ω•cm. Die Halbwertzeit der Entladung beträgt ~ 1,5 Sekunden.

Beispiel 12

Ein Formteil nach Beispiel 4 wird in einer Lösung bestehend aus
1000 ml n-Propanol
100,0 g $CaCl_2$
30,0 g Titansäuretetrabutylester
2,0 g Tetrabutylammoniumbromid
15 Minuten lang bei RT behandelt, mit $H_2O$ gewaschen und anschließend nach Beispiel 1 getrocknet. Man bekommt eine permanent antistatisch ausgerüstete Kunststoffplatte mit einem Oberflächenwiderstand von $10^8$ Ω•cm und einer Halbwertzeit von ~ 2 Sekunden. Die "Antistatikausrüstung" haftet an der Formkörperoberfläche so fest, daß sie den Hafttest nach DIN 53 151 mit Gt0-Gt1 besteht.

Beispiel 13

Eine Polyamidplatte nach Beispiel 6 wird in einem Antistatikbad, bestehend aus
1000 ml n-Butanol
100,0 ml $H_2O$ dest.
19,0 g 5-Methyl-5-hexen-2,4-dion $FeCl_3$-Komplex (s. Herstellung beispielsweise M.T. Teyssie et al. J. Polym. Sci. 50, 154 und 253 (1961)
8 Minuten lang bei RT behandelt, mit $H_2O$ dest. gewaschen und anschließend bei 90 °C im Trockenschrank 60 Minuten lang getrocknet. Man bekommt eine permanent antistatisch ausgerüstete Kunststoffplatte mit einem Oberflächenwiderstand von $10^7$ Ω•cm und einer Halbwertzeit von 1,5 Sekunden. Die "Antistatikausrüstung" haftet an der Formkörperoberfläche so fest, daß sie den Hafttest nach DIN 53 151 mit Gt1 besteht.

Beispiel 14

Eine 105 x 145 x 3 mm große, unverstärkte Spritzguß-Kunststoffplatte aus Polyamid-6 wird in einem Bad, welches
68,5 g $CaCl_2$,
1,5 g $AlCl_3$,

0,75 g Li-dodecylbenzolsulfonsäure-Salz
775 ml Ethanol,
225 ml (technisch) destilliertem Wasser,
enthält, bei Raumtemperatur 15 Minuten vorbehandelt, mit destilliertem $H_2O$ gewaschen, 10 Min. bei 80 °C getrocknet. Man bekommt eine antistatisch ausgerüstete und wasserbenetzbare Polyamidplatte.

Anschließend wird die so vorbehandelte Platte ohne Haftgrundierung mit einem konventionellen Metallic-CAB-(Cellulose-Acetobutyrat)-Acrylat-Basislack (Permacon®-Metallic-Vorlack der Fa. Spies-Hecker GmbH, 5000 Köln 51), welcher vornehmlich aus Aluminiumpulver, Bindemittel und Lösemittel besteht, bespritzt und bei RT getrocknet.

Man erhält einen lackierten Kunststoff mit einem Metallic-Effekt. Die Lackauflage haftet auf der Substratoberfläche so gut, daß sie den Gitterschnitt-Test nach DIN 53 151 mit Gt-O (sehr gut) besteht. Ferner besteht die oben angegebene Platte problemlos den Temperaturwechseltest nach DIN 53 496 bzw. den Kondenswasser-Klimatest nach DIN 50 017 problemlos mit "sehr gut".

Vergleichsbeispiel 1

Eine 6-Polyamidplatte nach Beispiel 14 wird in einer "Power-Waschanlage" gereinigt, gespült, getrocknet, mit ionisierender Luft abgeblasen (vgl. Prospekt über "Desmodur/Desmophen Bayer-Lackrohstoffe", Bestell.-Nr. LS 44427 vom 5.86, Bayer AG, D-5090 Leverkusen) und dann mit der im Beispiel 14 angegebenen Lackauflage versehen. Man bekommt eine lackierte Polyamidplatte. Die Haftung der Lackauflage auf der Polyamidoberfläche ist so gering, daß sie den Gitterschnitt-Test nach DIN 53 151 nicht besteht (Gt-5 sehr schlecht). Ferner besteht die Platte weder den Temperaturwechseltest nach DIN 53 496 noch den Kondenswasser-Klimatest nach DIN 50 017.

Beispiel 15

Eine 105 x 145 x 3 mm große verstärkte Spritzguß-Kunststoffplatte aus Polyamid-6,6 wird in einem Bad, welches
70,0 g $CaCl_2$,
1,5 g $Fe^{3+}$-Acetylacetonat,
750 ml Ethanol,
250 ml destilliertes Wasser,
enthält, bei Raumtemperatur 10 Minuten vorbehandelt, mit destilliertem Wasser im Ultraschallbad gewaschen und bei Raumtemperatur getrocknet. Man bekommt eine antistatisch ausgerüstete und wasserbenetzbare Polyamidplatte.

Anschließend wird diese Platte direkt mit einer im Beispiel 14 angegebenen Metallic-Lackauflage versehen.

Man erhält einen lackierten Kunststoff mit einem Metallic-Effekt. Die Lackauflage haftet auf der Substratoberfläche sehr gut. Sie besteht den Gitterschnitt-Test nach DIN 53 151 mit Gt-0 (sehr gut). Ferner besteht die Lackauflage sowohl den Temperaturwechseltest nach DIN 53 496 als auch den Kondenswasser-Klimatest nach DIN 50 017 problemlos mit "sehr gut".

Vergleichsbeispiel 2

Eine unverstärkte 6,6-Polyamidplatte nach Beispiel 15 wird in einer "Power-Waschanlage" gereinigt, gespült, getrocknet, mit ionisierender Luft abgeblasen (vgl. Prospekt über "Desmodur/Desmophen" Bayer-Lackrohrstoffe, Bestell.-Nr. LS 44427 vom 5.86, Bayer AG, D-5090 Leverkusen) und dann mit der im Beispiel 14 angegebenen Lackauflage versehen. Die Haftung der Lackauflage auf der Polyamidoberfläche ist so gering, daß sie den Gitterschnitt-Test nach DIN 53 151 nicht besteht (Gt-5 sehr schlecht). Ferner besteht die Platte weder den Temperaturwechseltest nach DIN 53 496 und den Kondenswasser-Klimatest nach DIN 50 017.

Beispiel 16 und 17

Je eine 105 x 145 x 3 mm große glasfaserverstärkte (~ 25 %) Kunststoffplatte aus Polyamid-6 und aus Polyamid-6,6 werden in einem Bad, welches aus
75 g $CaCl_2$
1,0 g $AlCl_3$
700 ml Methanol,
250 ml dest. Wasser,
enthält, bei ~ 40 °C 20 Minuten vorbehandelt, mit dest. Wasser gewaschen, getrocknet, mit ionisierender Luft abgeblasen und dann direkt mit der im Beispiel 14 angegebenen Lackauflage versehen.

Man bekommt lackierte Polyamidplatten mit einer hervorragenden Haftung. Die Auflagen bestehen den Gitterschnitt-Test nach DIN 53 151, den Temperaturwechseltest nach DIN 53 496 und den Kondenswasser-Klimatest nach DIN 50 017 problemlos mit "sehr gut".

Vergleichsbeispiele 3 und 4

Je eine 105 x 145 x 3 mm große glasfaserverstärkte (~ 25 Gew.-%) Kunststoffplatte aus Polyamid-6 beziehungsweise aus Polyamid-6,6 nach Beispielen 16-17 werden in einer "Power-Waschanlage" gereinigt, gespült, getrocknet, mit ionisierender Luft abgeblasen und dann mit einer im Beispiel 14 angegebenen Lackauflage versehen. Die Haftung der Lackauflage auf den Polyamidplatten ist so gering, daß sie die Tests nach DIN 53

151, DIN 53 496 und DIN 50 017 nicht besteht.

Beispiele 18 und 19

Je eine 105 x 145 x 3 mm große mineralverstärkte Kunststoffplatte aus Polyamid-6 und aus Polyamid-6,6 werden je 10 Minuten in einem Bad, welches aus

1000 ml Isopropanol

150 g $CaCl_2$

3,5 g $Fe^{3+}$-Schiffsche-Base-Komplex (auf der Basis 1,2-Diaminobenzol und Bissalicylaldehyd)

besteht, bei 50 °C behandelt, mit Ethanol (technisch) gewaschen, 10 Min. bei 80 °C getrocknet. Man bekommt eine antistatisch ausgerüstete und wasserbenetzbare Polyamidplatte.

Anschließend wird die so vorbehandelte Platte ohne Haftgrundierung mit einem handelsüblichen füllstoff-freien 2K-Klarlack auf der Basis von Polyisocyanat (Desmodur®/Desmophen®) und Polyol, hauptsächlich bestehend aus Polyether, Polyester und Polyacrylat (vom Typ RR 2579 - Richtrezeptur der BAYER AG, D-5090 Leverkusen) versehen und bei RT im Verlaufe von 40 Minuten getrocknet.

Man bekommt eine lackierte Platte. Die Lakkauflage haftet auf der Plattenoberfläche so gut, daß sie die Tests nach DIN 53 151, DIN 53 496 und DIN 50 017 problemlos mit sehr gut besteht.

Vergleichsbeispiele 5-6

Je eine 105 x 145 x 3 mm große mineralverstärkte Kunststoffplatte aus Polyamid-6 und aus Polyamid-6,6 werden nach dem Vergleichsbeispiel 1 vorgereinigt und dann nach dem Beispiel 5-6 lackiert. Die Haftung der Lackauflage auf den Polyamidplatten ist so gering, daß sie die Tests nach DIN 53 151, DIN 53 496 und DIN 50 017 nicht besteht.

Beispiel 20 und 21

Je eine 105 x 145 x 3 mm große mit Kautschukteilchen (~ 30 %) schlagfestmodifizierte Kunststoffplatte aus Polyamid-6 und aus Polyamid-6,6 werden je 6 Minuten in einem Bad, welches aus

800 ml Methanol,

60 g $CaCl_2$,

1,0 g $AlCl_3$,

1,5 g Tetrabutylammoniumbromid

besteht, bei 20 °C behandelt, mit dest. Wasser gewaschen. Man bekommt antistatisch ausgerüstete bzw. wasserbenetzbare Polyamidplatten.

Anschließend werden die so vorbehandelten Platten ohne Haftgrundierung direkt mit einem handelsüblichen Auto-Einbrennlack auf der Basis von Alkyl-Melaminharzen (vom Typ Alpinweiß der Fa. Hellac GmbH, D-3330 Helmstedt) bei 40 °C bespritzt und dann bei 80 °C 20 Min. getrocknet.

Man bekommt eine haftfestlackierte Platte. Die Lackauflage haftet auf der Plattenoberfläche so gut, daß sie die Tests nach DIN 53 151, DIN 53 496 und DIN 50 017 problemlos mit "sehr gut" besteht.

Vergleichsbeispiele 7 und 8

Je eine 105 x 145 x 3 mm große mit Kautschukteilchen (~ 30 %) schlagfestmodifizierte Kunststoffplatte aus Polyamid-6 und aus Polyamid-6,6 nach Beispielen 20 und 21 werden nach den Vergleichsbeispiel 1 vorgereinigt und dann mit einer im Beispiel 20 und 21 angegebenen Lackauflage versehen.

Die Haftung der Lackauflage ist so gering (Gt-5 nach DIN 53 151), daß sie weder den Kondenswasser-Klimatest nach DIN 50 017 noch den Temperaturwechseltest nach DIN 53 496 besteht.

Beispiel 22 und 23

Je eine 105 x 145 x 3 mm große mineral- und glasfaserverstärkte Kunststoffplatte aus Polyamid-6 bzw. Polyamid-6,6 werden nach Beispiel 14 vorbehandelt und anschließend nach Beispiel 14 mit einer Metallic-Lackauflage versehen.

Man bekommt Kunststoffproben mit einem Metallic-Effekt. Die Haftung der Lackauflage ist so gut, daß sie die Tests nach DIN 53 151, DIN 53 496 und DIN 50 017 problemlos mit "sehr gut" besteht.

Beispiel 24

Eine 90 x 150 x 3 mm starke Kunststoffplatte aus kautschukmodifiziertem und glasfaserhaltigem Polyamid-6 wird 10 Min. in einem Bad, welches

68,5 g $CaCl_2$,

1,9 g $AlCl_3$,

750 ml Ethanol (technisch),

225 ml dest. Wasser,

enthält, bei RT vorbehandelt, mit dest. Wasser in Ultraschallbad 5 Min. gewaschen, getrocknet, mit ionisierender Luft abgeblasen und dann nach Beispiel 16 mit einer Lackauflage versehen. Man bekommt eine haftfest lackierte Kunststoff-Probe. Die Haftung der Lackauflage ist so gut, daß sie den Gitterschnitt-Test mit Gt-0 (sehr gut) besteht. Ferner besteht die Lackauflage die Prüfungen nach DIN 53 496 und DIN 50 017 problemlos.

Beispiel 25

Eine 90 x 150 x 3 mm starke Kunststoffplatte aus einem handelsüblichen Polyamid-6,6 mit 30

Gew.-% Glasfasern wird 5 Minuten in einem Bad aus
120 g $CaCl_2$,
20 g $MgCl_2$,
3 g $FeCl_3$,
20 ml p-Toluolsulfonamid,
1500 ml Ethanol,
bei Raumtemperatur behandelt, bei RT getrocknet und dann gemäß Beispiel 14 mit einer Lackauflage versehen. Man bekommt einen lackierten Werkstoff mit einer sehr guten Lackhaftung (Gt-0 nach DIN 53151).

**Patentansprüche**

1. Verfahren zur antistatischen Ausrüstung oder Vorbehandlung von polymeren Werkstoffen auf Basis von Polyamiden, Polyimiden oder Polyamidimiden, dadurch gekennzeichnet, daß man die polymeren Werkstoffe

   mit der Lösung einer Mischung von

   a) Halogeniden von Elementen der 1. und 2. Hauptgruppe des Periodensystems, insbesondere Chloriden, besonders bevorzugt $CaCl_2$ und/oder $MgCl_2$ und/oder KCl und/oder LiCl und/oder NaCl

   mit

   b)
   1) Salzen aus schwachen anorganischen Basen und starken anorganischen Säuren, insbesondere $FeCl_3$ und/oder $AlCl_3$ und/oder $TiCl_4$ und/oder $TiCl_3$ und/oder $BCl_3$ und/oder $SbCl_5$ und/oder $MoCl_5$ und/oder $SnCl_2$ und/oder $ZnCl_2$ und/oder $CuCl_2$
   2) und/oder deren Chelatkomplexen von b1) mit Schiffschen Basen, komplexbildenden Aminen, Carbonsäuren, Diketonen, $\alpha,\beta$-ungesättigten Ketonen und Phosphinen,

   c) in einem nichtätzenden, organischen Quell-oder Lösungsmittel für die genannten Werkstoffe, vorzugsweise in einem technischen Alkohol, gegebenenfalls unter Waserzusatz;

   bei Temperaturen bis zum Siedepunkt der Lösungsmittel c), vorzugsweise bei Temperaturen von -15 °C bis +60 °C, insbesondere +15 °C bis +40 °C, während 0,5 bis 30 Minuten behandelt und die Formkörper nach Waschen mit Wasser oder Lösungsmitteln trocknet.

2. Verfahren nach Anspruch 1, dadurch gekennzeichnet, daß der Anteil der Salze schwacher Basen b1) 30 Gew.-% in der Gesamtsalzmenge (a+b1) nicht übersteigt.

3. Verfahren nach Anspruch 1 und 2, dadurch gekennzeichnet, daß als Halogenide a) Chloride, bevorzugt $CaCl_2$, $MgCl_2$ und LiCl verwendet.

4. Verfahren nach Ansprüchen 1 bis 3, dadurch gekennzeichnet, daß man als Salze schwacher Basen (b1) Sulfate, Nitrate und besonders Chloride von Metallen der 3. und 4. Haupt- und Nebengruppe und/oder von Nichtedelmetallen der 6. und 8. Nebengruppe des Periodensystems der Elemente, sowie von Zink und Kupfer, bevorzugt $SnCl_2$, $AlCl_3$, $TiCl_3$ $BCl_3$ und insbesondere $FeCl_3$, verwendet.

5. Verfahren nach Ansprüchen 1 bis 4, dadurch gekennzeichnet, daß man Gemische von $CaCl_2$, $MgCl_2$, $BaCl_2$ oder LiCl mit $FeCl_3$, $TiCl_3$, $TiCl_4$, $BCl_3$, $AlCl_3$, $FeCl_2$ oder $SnCl_2$ einsetzt.

6. Verfahren nach Ansprüchen 1 bis 5, dadurch gekennzeichnet, daß man als Quell- und Lösungsmittel übliche Lösungsmittel wie niedrige aliphatische oder araliphatische (technische) Alkohole, Dimethylformamid, Diethylacetamid, Dimethylsulfoxid oder ihre Mischungen, besonders bevorzugt jedoch Methanol und Ethanol, gegebenenfalls unter Zusatz von weiteren Lösemitteln wie Wasser, Ethylenglykol und/oder Estern niedriger Carbonsäuren in Mengen bis zu 40 Gew.-%, bevorzugt bis 30 Gew.-%, bezogen auf die flüssigen Lösemittel, verwendet.

7. Verfahren nach Ansprüchen 1 bis 6, dadurch gekennzeichnet, daß man Chelatkomplexe b2) der Metallsalze b1) mit Schiffschen Basen, Diketen, $\alpha,\beta$-ungesättigten Ketonen, Ascorbinsäure und/oder Phosphinen in einem technischen Alkohol, vorzugsweise Methanol, verwendet.

8. Verfahren nach Ansprüchen 1 bis 7, dadurch gekennzeichnet, daß man 0,2 bis 10 Gew.-% an üblichen Weichmachern und/oder 0,2 bis 10 Gew.-% an üblichen Antistatika zumischt.

9. Antistatisch ausgerüstete oder zur haftfesten Lackierung vorbehandelte Formkörper aus Werkstoffen auf der Basis von Polyamiden oder Polyimiden bzw. Polyamid-/imiden nach Ansprüchen 1 bis 8, dadurch gekennzeichnet, daß sie in der Matrix bzw. auf der Oberfläche Kationen der Elemente A1 und/oder Fe und/oder Ti und/oder Sb und/oder Sn und/oder Zn und/oder Fe und/oder Cu und/oder Mo aufweisen.

**10.** Verwendung von antistatisch ausgerüsteten bzw. zu haftfester Lackierung vorbehandelter und lackierter Werkstoffe nach Ansprüchen 1 bis 9 im Haushalt-, Elektro-, Elektronik-, Automobil-, Bergbau-, Anlagen- und Raffineriebereich.

## Claims

**1.** A process for the antistatic treatment or pretreatment of polymeric materials based on polyamides, polyimides or polyamide imides, characterized in that the polymeric materials are treated

with a solution of a mixture of

a) halides of elements of the 1st and 2nd main group of the periodic system, more particularly chlorides, preferably $CaCl_2$ and/or $MgCl_2$ and/or KCl and/or LiCl and/or NaCl

with

b)

1) salts of weak inorganic bases and strong inorganic bases, more particularly $FeCl_3$ and/or $AlCl_3$ and/or $TiCl_4$ and/or $TiCl_3$ and/or $BCl_3$ and/or $SbCl_5$ and/or $MoCl_5$ and/or $SnCl_2$ and/or $ZnCl_2$ and/or $CuCl_2$

2) and/or chelate complexes of b1) with Schiff's bases, complexing amines, carboxylic acids, diketones, $\alpha,\beta$-unsaturated ketones and phosphines,

c) in a non-corrosive, organic swelling agent or solvent for the said materials, preferably in a technical alcohol, optionally with addition of water;

for 0.5 to 30 minutes at temperatures up to the boiling point of the solvent c), preferably at temperatures of -15° C to +60° C and, more preferably, at temperatures of +15° C to +40° C and, after washing with water or solvents, the mouldings are dried.

**2.** A process as claimed in claim 1, characterized in that the percentage content of salts of weak bases b1) does not exceed 30% by weight of the total quantity of salts (a+b1).

**3.** A process as claimed in claims 1 and 2, characterized in that chlorides, preferably $CaCl_2$, $MgCl_2$ and LiCl, are used as the halides a).

**4.** A process as claimed in claims 1 to 3, characterized in that sulfates, nitrates and particularly chlorides of metals of the 3rd and 4th main and secondary group and/or of base metals of the 6th and 8th secondary group of the periodic system of elements and of zinc and copper, preferably $SnCl_2$, $AlCl_3$, $TiCl_3$, $BCl_3$ and, in particular, $FeCl_3$ are used as the salts of weak bases (b1).

**5.** A process as claimed in claims 1 to 4, characterized in that mixtures of $CaCl_2$, $MgCl_2$, $BaCl_2$ or LiCl with $FeCl_3$, $TiCl_3$, $TiCl_4$, $BCl_3$, $AlCl_3$, $FeCl_2$ or $SnCl_2$ are used.

**6.** A process as claimed in claims 1 to 5, characterized in that the swelling agents and solvents used are typical solvents, such as lower aliphatic or araliphatic (technical) alcohols, dimethyl formamide, diethyl acetamide, dimethyl sulfoxide or mixtures thereof, but especially methanol and ethanol, optionally in conjunction with other solvents, such as water, ethylene glycol and/or esters of lower carboxylic acids in quantities of up to 40% by weight and preferably in quantities of up to 30% by weight, based on the liquid solvents.

**7.** A process as claimed in claims 1 to 6, characterized in that chelate complexes b2) of the metal salts b1) with Schiff's bases, diketene, $\alpha,\beta$-unsaturated ketones, ascorbic acid and/or phosphines in a technical alcohol, preferably methanol, are used.

**8.** A process as claimed in claims 1 to 7, characterized in that 0.2 to 10% by weight typical plasticizers and/or 0.2 to 10% by weight typical antistatic agents are added.

**9.** Mouldings of materials based on polyamides or polyimides or polyamide imides which have been antistatically treated or pretreated to receive firmly adhering paint coatings by the method claimed in claims 1 to 8, characterized in that they contain cations of the elements Al and/or Fe and/or Ti and/or Sb and/or Sn and/or Zn and/or Fe and/or Cu and/or Mo in the matrix or on the surface.

**10.** The use of the materials according to claims 1 to 9, which have been antistatically treated or pretreated to receive firmly adhering paint coatings and subsequently painted, in the home, in the electrical field, in electronics, in the automotive field, in mining, in plant construction and in the refinery field.

## Revendications

**1.** Procédé pour l'apprêtage antistatique ou le traitement préalable antistatique de matériaux polymères à base de polyamides, de polyimides, ou de polyamide-imides, caractérisé en ce que l'on traite les matériaux polymères par la solution d'un mélange :

a) des halogénures des éléments du premier et du deuxième groupe principal de la Classification Périodique, en particulier des chlorures, de préférence $CaCl_2$ et/ou $MgCl_2$ et/ou KCl et/ou LiCl et/ou NaCl

avec

b)

1) des sels de bases minérales faibles et d'acides minéraux forts, en particulier $FeCl_3$ et/ou $AlCl_3$ et/ou $TiCl_4$ et/ou $TiCl_3$ et/ou $BCl_3$ et/ou $SbCl_5$ et/ou $MoCl_5$ et/ou $SnCl_2$ et/ou $ZnCl_2$ et/ou $CuCl_2$

2) et/ou tes complexes de b1) et de bases de Schiff, d'amines complexantes, d'acides carboxyliques, de dicétones, de cétones α,ß-insaturées et de phosphines,

c) dans un agent gonflant ou solvant organique des matériaux en question, n'attaquant pas ces matériaux, de préférence dans un alcool industriel, le cas échéant avec adjonction d'eau ;

à des températures allant jusqu'au point d'ébullition du solvant c), de préférence à des températures de -15 à +60 ° C, plus spécialement de +15 à +40 ° C, pendant des durées de 0,5 à 30 min, on lave les objets moulés à l'eau ou avec des solvants et on les sèche.

**2.** Procédé selon la revendication 1, caractérisé en ce que la proportion des sels de bases faibles b1) ne dépasse pas 30 % du poids des sels totaux (a + b1).

**3.** Procédé selon les revendications 1 et 2, caractérisé en ce que l'on utilise en tant qu'halogénures a) des chlorures, de préférence $CaCl_2$, $MgCl_2$ et LiCl.

**4.** Procédé selon les revendications 1 à 3, caractérisé en ce que l'on utilise en tant que sels de bases faibles b1) des sulfates, des nitrates et plus spécialement des chlorures des métaux du troisième et du quatrième groupe principal et sous-groupe et/ou des métaux non nobles du sixième et du huitième sous-groupe de la Classification Périodique des Eléments, ou encore du zinc et du cuivre, de préférence $SnCl_2$, $AlCl_3$, $TiCl_3$, $BCl_3$ et surtout $FeCl_3$.

**5.** Procédé selon les revendications 1 à 4, caractérisé en ce que l'on utilise des mélanges de $CaCl_2$, $MgCl_2$, $BaCl_2$ ou LiCl avec $FeCl_3$, $TiCl_3$, $TiCl_4$, $BCl_3$, $AlCl_3$, $FeCl_2$ ou $SnCl_2$.

**6.** Procédé selon les revendications 1 à 5, caractérisé en ce que l'on utilise en tant qu'agents gonflants et solvants des solvants usuels tels que des alcools aliphatiques ou araliphatiques (techniques) inférieurs, le diméthylformamide, le diéthylacétamide, le diméthylsulfoxyde ou leurs mélanges, mais de préférence le méthanol et l'éthanol, le cas échéant avec adjonction d'autres solvants tels que l'eau, l'éthylèneglycol et/ou des esters d'acides carboxyliques inférieurs en quantités allant jusqu'à 40% en poids, de préférence jusqu'à 30% en poids, par rapport aux solvants liquides.

**7.** Procédé selon les revendications 1 à 6, caractérisé en ce que l'on utilise des complexes b2) des sels métalliques b1) et de bases de Schiff, du dicétène, de cétones α,ß-insaturées, de l'acide ascorbique et/ou de phosphines, dans un alcool technique, de préférence le méthanol.

**8.** Procédé selon les revendications 1 à 7, caractérisé en ce que l'on ajoute et mélange 0,2 à 10% en poids de plastifiants usuels et/ou 0,2 à 10% en poids d'agents antistatiques usuels.

**9.** Objets moulés en matériaux à base de polyamides ou de polyimides ou de polyamide-imides selon les revendications 1 à 8, ayant subi un apprêtage antistatique ou un traitement préalable antistatique en vue de l'application subséquente d'un revêtement adhérent, caractérisés en ce qu'ils contiennent dans la masse ou sur la surface des cations des éléments Al et/ou Fe et/ou Ti et/ou Sb et/ou Sn et/ou Zn et/ou Fe et/ou Cu et/ou Mo.

**10.** Utilisation des matériaux ayant subi un apprêtage antistatique ou un traitement préalable antistatique en vue de l'application subséquente d'un revêtement adhérent et revêtus, selon les revendications 1 à 9, dans les domaines des appareils électroménagers, des appareils électriques, de l'électronique, de l'industrie automobile, de l'industrie minière, de la construction et des raffineries.